# EUROPÄISCHE PATENTSCHRIFT

(11) **EP 2 086 769 B1**
(45) Veröffentlichungstag und Bekanntmachung des Hinweises auf die Patenterteilung: **24.11.2010**
(21) Anmeldenummer: 07819631.8
(22) Anmeldetag: 06.11.2007
(51) Int. Cl.: B42D 15/00

(54) **SICHERHEITSFOLIE**
SAFETY FOIL
FILM DE SÉCURITÉ

(30) Priorität: 07.11.2006 DE 102006052413
(43) Veröffentlichungstag der Anmeldung: 12.08.2009
(73) Patentinhaber: Giesecke & Devrient GmbH, 81677 München (DE)
(72) Erfinder: HEIM, Manfred, 83646 Bad Tölz (DE)
(74) Vertreter: Zeuner, Stefan
(86) Internationale Anmeldenummer: PCT/EP2007/009614
(87) Internationale Veröffentlichungsnummer: WO 2008/055658

(56) Entgegenhaltungen:
- EP-A- 1 486 803
- WO-A-01/80175
- WO-A-03/027952
- US-A1- 2002 044 351

## Beschreibung

Die Erfindung betrifft eine Sicherheitsfolie, insbesondere ein Sicherheits- oder Verifikationselement, für die Echtheitsabsicherung von Wertdokumenten und dergleichen.

Sicherheits- und Wertdokumente, deren Handels- oder Nutzwert den Materialwert bei weitem übersteigt, werden in der Regel durch geeignete Maßnahmen als echt erkennbar und von Nachahmungen und Fälschungen unterscheidbar gemacht. Sie werden dazu mit besonderen Sicherheitselementen versehen, die idealerweise nicht oder nur mit großem Aufwand nachahmbar und nicht verfälschbar sind.

Bei verschiedenen dieser Sicherheitselemente für Wertdokumente muss das Sicherheitselement zur Verifikation mit linear polarisiertem Licht beleuchtet werden oder das Sicherheitselement muss durch ein Polarisationsfilter betrachtet werden. Es kann auch vorgesehen sein, dass das Polarisationsfilter für die Verifikation direkt auf das Sicherheitselement aufgelegt werden muss. Für alle diese Zwecke kommen marktübliche Folienpolarisatoren zum Einsatz, deren Folienstärke oberhalb von 100 µm liegt.

Die Druckschrift WO 98/15418 A1 beschreibt ein selbstauthentisierendes Sicherheitsdokument, bei dem die selbstauthentisierenden Mittel sowie das Sicherheitselement als polarisierende Fenster ausgebildet sein können. Die transparenten polarisierenden Fenster können beispielsweise durch Recken einer transparenten Kunststofffolie hergestellt werden, wodurch die in der Folie vorliegenden Kristalle oder Moleküle entsprechend ausgerichtet werden. Alternativ kann auch eine PDLC (Polymer Dispersed Liquid Crystal)-Folie verwendet werden.

Aus der Druckschrift DE 197 29 918 A1 ist ein Sicherheitsdokument bekannt, in das ein Verifikationselement und ein mit diesem verifizierbares Sicherheitsmerkmal integriert sind. Das Verifikationselement kann dabei als Polarisationsfilter ausgebildet sein. Die linearen Polarisationsfilter bestehen beispielsweise aus Polyvinyl-Alkohol-Folien, die mit Jodidfarben bedruckt sind.

Ausgehend davon liegt der Erfindung die Aufgabe zugrunde, eine Sicherheitsfolie der eingangs genannten Art anzugeben, die die Nachteile des Standes der Technik vermeidet oder zumindest reduziert. Insbesondere sollen neuartige polarisierende Sicherheitsfolien vorgeschlagen werden, die einen hohen Fälschungsschutz bieten und die sich beispielsweise als Verifikationselemente zum Einsatz in selbstauthentisierenden Sicherheitsdokumenten oder als Sicherheitselemente mit versteckten Informationen eignen.

Diese Aufgabe wird durch die Sicherheitsfolie mit den Merkmalen des Hauptanspruchs gelöst. Ein entsprechendes Herstellungsverfahren sowie ein mit einem derartigen Sicherheitselement ausgestatteter Datenträger sind in den nebengeordneten Ansprüchen angegeben. Weiterbildungen der Erfindung sind Gegenstand der abhängigen Ansprüche.

Gemäß der Erfindung enthält eine Sicherheitsfolie, insbesondere ein Sicherheits- oder Verifikationselement, in zumindest einem Teilbereich einen Gitterpolarisator, der ein Substrat mit einer ersten Oberfläche aufweist, in die eine Reliefstruktur eingebracht ist, gemäß Anspruch 1.

Es sei an dieser Stelle angemerkt, dass unter einer Gitterkonstante nicht nur der Abstand periodisch angeordneter Gitterlinien, sondern auch der Abstand aperiodisch (nichtperiodisch) angeordneter Gitterlinien verstanden wird. Für die Erfindung spielt es nämlich keine Rolle, ob die parallelen Gitterlinien periodisch angeordnet oder aber nichtperiodisch angeordnet sind und lediglich im Mittel einen vorbestimmten mittleren Abstand aufweisen. Erfindungswesentlich ist somit lediglich, dass die parallelen Gitterlinien über einen bestimmten Flächenbereich gemittelt einen vorbestimmten (mittleren) Gitterlinienabstand aufweisen. Somit können aperiodische Anordnungen von Gitterlinien einen erfindungswesentlichen vorbestimmten (mittleren) Gitterlinienabstand aufweisen. Demnach sind alle diejenigen aperiodischen Gitterstrukturen mit einem vorbestimmten (mittleren) Gitterlinienabstand von der Erfindung umfasst, mit denen reflektiertes Licht und/oder transmittiertes Licht in einer vorbestimmten Ebene linear polarisiert werden kann.

Die vorstehend beschriebene, von der Erfindung umfasste aperiodische Anordnung der Gitterlinien des Gitterpolarisators hat im Übrigen gegenüber einer periodischen Gitterlinienanordnung den Vorteil, dass sie kein Licht beugt und deshalb achromatisch ist. Auch zeigen aperiodische Gitterlinienanordnungen keine unerwünschten Beugungserscheinungen, wie dies von periodischen Gitterlinienanordnungen bekannt ist, die z. B. leicht so genannte "Übergitter" bilden. Übergitter stellen mit dem Auge sichtbare Beugungseffekte dar, obwohl die Gitterkonstante eigentlich unterhalb der sichtbaren Wellenlänge liegt.

US 2002044351 zeigt eine Folie mit einer periodischen Reliefstruktur zur Ausbildung eines Gitterpolarisator.

Die Erfindung umfasst bestimmte aperiodische Gitterlinienanordnungen. Insoweit werden die Begriffe "Gitterkonstante" und "Gitterperiode" im Weiteren zur Charakterisierung solcher periodischen und aperiodischen Gitterlinienanordnungen verwendet.

In Bezug auf den Begriff "Zwischenraum" sei angemerkt, dass damit keine Beschränkung auf irgendeine Umrissform, Orientierung oder Größe erfolgt. Erfindungsgemäß reicht es z. B. aus, wenn der Zwischenraum zwischen den Gitterlinien eine Größe aufweist, die nur noch mit technischen Hilfsmitteln nachweisbar ist, dem Auge aber verborgen bleibt.

Auch ist das Merkmal "im Wesentlichen nichtleitend" auf unterschiedliche Art und Weise zu realisieren. Der erfindungsgemäße Effekt kann z. B. mit einer sehr dünnen und deshalb nur sehr schlecht leitenden Schicht eines an sich leitenden Materials, einer dickeren, aber nichtleitenden Schicht oder aber einer Unterbrechung einer leitenden Schicht, die für die leitfähigen Gitterlinien verwendet wird, erreicht werden. Entscheidend ist letztlich, dass der Widerstand zwischen den elektrisch leitfähigen, parallelen Gitterlinien wesentlich höher als entlang der Gitterlinien ist. Z. B. kann der Widerstand in den Zwischenräumen um den Faktor 10 höher sein als entlang der Gitterlinien.

Die Gitterlinien weisen bevorzugt eine Gitterperiode von etwa 2200 Linien/mm oder mehr, bevorzugt von etwa 2500 Linien/mm oder mehr auf. Die Profiltiefe der Reliefstruktur kann erfindungsgemäß in weitem Rahmen gewählt werden, bevorzugt werden dabei gegenwärtig Profiltiefen im Bereich von etwa 50 nm bis etwa 500 nm. Vorzugsweise ist die Reliefstruktur mit steilen Flanken ausgebildet, insbesondere mit einem Flankenwinkel von 60° oder mehr.

Um die elektrisch leitfähigen, parallelen Gitterlinien zu bilden, ist die Reliefstruktur der Sicherheitsfolie zweckmäßig metallisiert. Dabei kommt vor allem eine Vakuummetallisierung mit Aluminium, Kupfer, Chrom, Silber, Gold oder einem anderen geeigneten Metall in Betracht. Die Schichtdicke der Metallisierung liegt dabei im Allgemeinen zwischen 5 nm und 50 nm.

In vorteilhaften Ausgestaltungen weist die Reliefstruktur ein Rechteck- oder ein Trapezprofil auf, wobei auch z. B. geschwungene oder sinoidale Profile eingesetzt werden können. Entscheidend ist bei letzteren Strukturen, dass die Flanken ausreichend steil sind. Um die im Wesentlichen nichtleitenden Zwischenräume zu bilden, ist die Reliefstruktur mit Vorteil zumindest an einer Flanke des Rechteck- oder Trapezprofils nicht metallisiert. Beispielsweise kann die Reliefstruktur im Wesentlichen nur an den horizontalen Flächen des Rechteck- oder Trapezprofils metallisiert sein. Wie weiter unten genauer ausgeführt, können die erforderlichen selektiven Metallisierungen z. B. durch schräges Bedampfen mit geeigneten Verfahren erzielt werden. Selbstverständlich ist es, wie bereits ausgeführt, auch möglich, dass die Zwischenräume eine nur sehr dünne Metallschicht aufweisen und daher im Wesentlichen nichtleitend sind.

In einer anderen Ausgestaltung weist die Reliefstruktur ein Sägezahnprofil mit im Wesentlichen senkrechten Flanken auf, wobei an den senkrechten Flanken keine Metallisierung vorliegt. Die elektrische Isolation der Gitterlinien muss allerdings nicht vollständig sein, für den erfindungsgemäßen Effekt genügt es vielmehr, wenn der elektrische Widerstand senkrecht zu den Gitterlinien wesentlich höher ist als parallel zu den Gitterlinien.

Bei einer Weiterbildung der Erfindung enthält die Sicherheitsfolie zumindest zwei Teilbereiche mit Gitterpolarisatoren mit unterschiedlicher Gitterkonstante und/oder unterschiedlicher Gitterorientierung der Gitterlinien. Die zumindest zwei Teilbereiche sind dabei vorzugsweise in Form von Mustern, Zeichen oder einer Codierung angeordnet.

Die polarisierende Reliefstruktur mit einer Anordnung elektrisch leitfähiger, paralleler Gitterlinien kann nach einer vorteilhaften Weiterbildung der Erfindung mit einer weiteren Reliefstruktur kombiniert sein, die der Beugung des einfallenden Lichts zur Erzeugung eines Beugungsbilds, insbesondere eines Hologrammmotivs dient. Die weitere Reliefstruktur weist dabei insbesondere eine Gitterperiode zwischen 700 Linien/ mm und 2000 Linien/ mm auf. Die polarisierende Reliefstruktur und die weitere Reliefstruktur können einander überlappen. Um eine höchstmögliche Qualität des Beugungsbilds zu erhalten, ist allerdings eine Ausgestaltung bevorzugt, bei der die beiden Reliefstrukturen einander nicht überlappend nebeneinander angeordnet sind.

Bei der weiteren Reliefstruktur kann es sich aber auch um eine sogenannte "Mattstruktur" handeln. Dem Fachmann sind Mattstrukturen grundsätzlich bekannt, insbesondere solche Mattstrukturen, bei denen der Betrachter beim Verkippen einen Bewegungseffekt wahrnimmt. Auch die Mattstruktur kann entweder überlappend oder nicht überlappend zu der polarisierenden Reliefstruktur angeordnet sein.

Als weitere Reliefstruktur können ferner auch sogenannte "Mikrospiegel" in Form achromatisch reflektierender Mikrostrukturen, metallisierte Fresnel-Linsen und/oder sogenannte "Blaze-Gitter" überlappend oder nicht überlappend zu der polarisierenden Reliefstruktur angeordnet sein.

In einer weiteren vorteilhaften Ausführungsform ist ferner vorgesehen, dass der polarisierenden Reliefstruktur eine optisch variable Beschichtung mit einem Farbkippeffekt überlagert oder unterlegt ist. Beispielsweise könnte mit dem Verfahren, mit dem die Metallisierung der Gitterlinien erfolgt, auch eine weitere Schichtenfolge auf der Metallschicht angeordnet werden, die einen solchen Farbkippeffekt zeigt. Dem Fachmann sind entsprechende Schichtaufbauten dieser optisch variablen Interferenzschichtsysteme sowie Verfahren zu ihrer Herstellung bekannt.

In allen Ausgestaltungen ist bevorzugt, dass die Sicherheitsfolie ein Sicherheits- oder Verifikationselement mit einer Dicke von etwa 50 µm oder weniger bildet.

In einer vorteilhaften Ausführungsform bildet die Sicherheitsfolie ein Verifikationselement in Form eines über einem Durchsichtsfenster angeordneten Polarisationsfilters. In einer anderen, ebenfalls vorteilhaften Ausgestaltung bildet die Sicherheitsfolie ein Verifikationselement in Form eines UV-Polarisationsfilters. Bei letzteren weisen die Gitterlinien zweckmäßig eine Gitterperiode zwischen etwa 4000 Linien/ mm und etwa 10000 Linien/ mm auf.

In Weiterbildungen der Erfindung können bei der Sicherheitsfolie eine oder mehrere weitere Schichten vorgesehen sein, die dem Schutz der Sicherheitsfolie oder einer ihrer Teilschichten, einer verbesserten Haftung einzelner Schichten oder einer weiteren Erhöhung der Fälschungssicherheit dienen.

Die Erfindung umfasst auch ein Verfahren zur Herstellung einer Sicherheitsfolie gemäß Anspruch 13.

In einer bevorzugten Verfahrensvariante wird die Reliefstruktur mittels Prägetechniken erzeugt. Nach einer alternativen, besonders vorteilhaften Verfahrensvariante wird die Reliefstruktur holographisch mittels Direktbelichtung oder mittels Elektronenstrahllithographie erzeugt.

Die elektrisch leitfähigen Gitterlinien werden mit Vorteil durch Vakuummetallisierung, insbesondere durch eine schräge Bedampfung der Reliefstruktur mit einem Metall gebildet.

Die Erfindung umfasst ferner einen Datenträger, insbesondere ein Wertdokument, wie eine Banknote, Ausweiskarte oder dergleichen, der mit einer Sicherheitsfolie, insbesondere einem Sicherheits- oder Verifikationselement der beschriebenen Art ausgestattet ist.

Schließlich umfasst die Erfindung die Verwendung einer erfindungsgemäßen Sicherheitsfolie zur Fälschungssicherung von Waren beliebiger Art. Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote, die mit einem erfindungsgemäßen Sicherheitselement mit Gitterpolarisato- ren sowie einem weiteren Sicherheitselement und einem er- findungsgemäßen Verifikationselement mit Gitterpolarisator für das weitere Sicherheitselement ausgestattet ist,
- Fig. 2: schematisch einen Gitterpolarisator in perspektivischer Ansicht,
- Fig. 3: in (a) eine genauere Darstellung der Banknote der Fig.1 mit Sicherheitselement und Verifikationselement, und in (b) die Banknote in gefaltetem Zustand mit dem dann erkennbaren versteckten Wappenmotiv,
- Fig. 4: eine detailliertere Aufsicht auf den Sicherheitsfaden der Fig. 1,
- Fig. 5: in (a) eine Banknote mit einem Polarisationsbereich und einer über einem Durchsichtsbereich angeordneten Sicherheitsfolie mit Gitterpolarisatoren, in die eine versteckte Information co- diert ist, und in (b) die Banknote in gefaltetem Zustand mit dem dann erkennbaren versteckten Wappenmotiv,
- Fig. 6: einen Querschnitt durch eine Sicherheits- folie mit nebeneinanderliegenden ersten und zweiten Präge- strukturen,
- Fig. 7: einen Querschnitt durch eine weitere Si- cherheitsfolie mit Reliefstrukturen mit einem Sägezahnprofil mit im Wesentlichen senkrechten Flanken,
- Fig. 8: in (a) ein Sicherheitselement mit UV-anregbaren Sicherheits- merkmalen, die sich nur mit linear polarisiertem Licht einer bestimmten Orientierung anregen lassen, in (b) das Erschei- nungsbild des Sicherheitselements bei Beaufschlagung mit unpolarisiertem UV-Licht und in (c) das Erscheinungsbild bei Beleuchtung durch einen erfindungsgemäßen UV-Gitter- polarisator, und
- Fig. 9: einen Querschnitt durch eine Sicherheits- folie mit übereinander angeordneten ersten und zweiten Prä- gestrukturen.

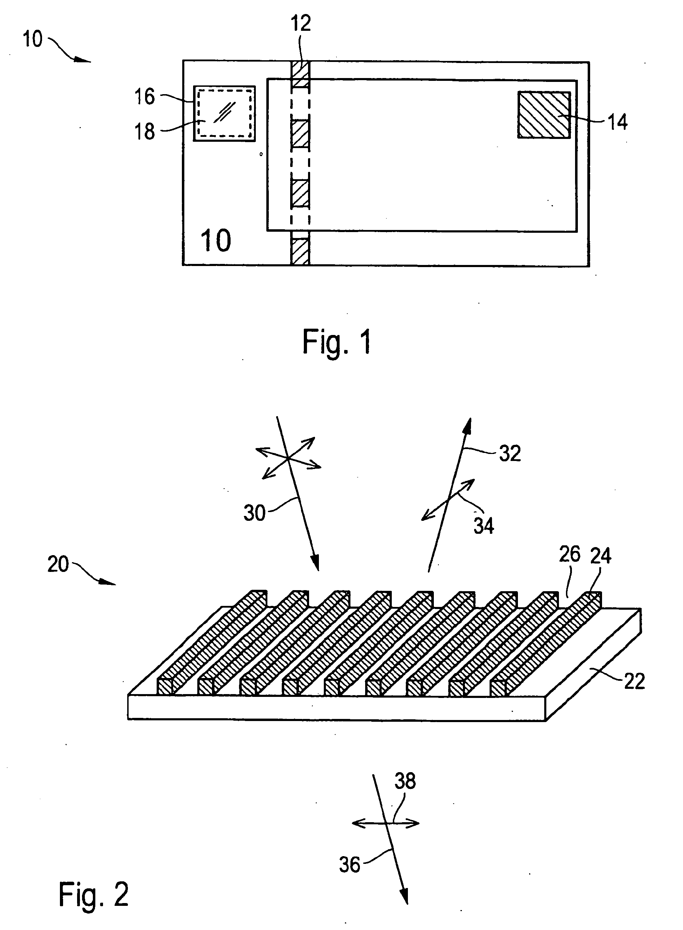

Die Erfindung wird nun am Beispiel verschiedener Sicherheits- bzw. Verifikationselemente für Banknoten erläutert. Fig. 1 zeigt dazu eine schematische Darstellung einer Banknote 10, die mit einem erfindungsgemäßen Sicherheitselement 12 mit Gitterpolarisatoren ausgestattet ist. Das Sicherheitselement 12 ist in Form eines Fenstersicherheitsfadens ausgebildet, der an bestimmten Fensterbereichen an der Oberfläche der Banknote 10 hervortritt, während er in den dazwischen liegenden Bereichen im Inneren der Banknote 10 eingebettet ist.

Darüber hinaus enthält die Banknote 10 ein weiteres Sicherheitselement 14 mit einem mit bloßem Auge nicht erkennbaren Motiv. Wie weiter unten genauer beschrieben, kann das versteckte Motiv mithilfe eines erfindungsgemäßen Verifikationselements 16 mit Gitterpolarisator, das über einem Durchsichtsbereich 18 der Banknote angeordnet ist, sichtbar gemacht werden.

Das Grundprinzip der in den erfindungsgemäßen Sicherheitsfolien eingesetzten Gitterpolarisatoren wird nun mit Bezug auf Fig. 2 erläutert. Fig. 2 zeigt schematisch einen Gitterpolarisator 20 in perspektivischer Ansicht, der ein transparentes Substrat 22, beispielsweise eine transparente Kunststofffolie, und eine auf dem Substrat 22 angeordnete Reliefstruktur aus einer Anordnung aus elektrisch leitfähigen, parallelen Gitterlinien 24 aufweist, die jeweils durch im Wesentlichen nichtleitende Zwischenräume 26 voneinander getrennt sind.

Die Anordnung der Gitterlinien 24 ist durch eine Gitterkonstante und eine Orientierung der Gitterlinien charakterisiert, wobei die Gitterkonstante im Rahmen der Erfindung so gewählt ist, dass der Gitterpolarisator 20 die Polarisation von auf die Gitterlinien auftreffendem unpolarisiertem Licht 30 verändert, so dass das reflektierte Licht 32 und/oder das transmittierte Licht 36 in einer vorbestimmten Ebene linear polarisiert sind.

Um sichtbares Licht möglichst vollständig zu polarisieren, wird dazu eine Gitterperiode von etwa 2200 Linien/ mm oder mehr, vorzugsweise von etwa 2500 Linien/mm oder mehr gewählt. Für die Polarisation von UV-Strahlung wird wegen der kürzeren Wellenlängen eine kleinere Gitterkonstante mit einer Gitterperiode zwischen 4000 und 10000 Linien/mm gewählt.

Wie bereits erwähnt, erfolgt eine Polarisation des einfallenden Lichts mit einem Gitterpolarisator, bei dem der Abstand der Gitterlinien aperiodisch ist. Für den Fall, dass der Gitterpolarisator Gitterlinien mit aperiodischem Gitterlinienabstand aufweist, muss der mittlere Gitterlinienabstand in einem vorgegebenen Flächenbereich jedoch den vorstehend angegebenen Werten von etwa 2200 Linien/ mm oder mehr (sichtbares Licht) bzw. 4000 Linien/ mm oder mehr (UV-Licht) entsprechen, um die gewünschte Polarisation herbeizuführen.

Trifft unpolarisiertes Licht 30 auf den Gitterpolarisator 20, so erscheint die Anordnung der Gitterlinien 24 für den parallel zu den Gitterlinien polarisierten Lichtanteil wie eine durchgehende Metallfläche; dieser Anteil des einfallenden Lichts wird daher nahezu vollständig reflektiert. Für den senkrecht zu den Gitterlinien 24 polarisierten Lichtanteil dominiert dagegen der Einfluss der im Wesentlichen nichtleitenden Zwischenräume 26, so dass dieser Anteil des einfallenden Lichts nahezu vollständig transmittiert wird.

Insgesamt ist das von dem Gitterpolarisator reflektierte Licht 32 in einer Ebene 34 parallel zu den Gitterlinien 24 linear polarisiert und das transmittierte Licht 36 in einer Ebene 38 senkrecht zu den Gitterlinien 24 linear polarisiert, wie in Fig. 2 durch die Pfeile 34, 38 schematisch dargestellt. Im Ergebnis wirkt der Gitterpolarisator der Fig. 2 zum einen in Transmission als Linearpolarisator und zum anderen in Reflexion als Linearpolarisator, da der transmittierte bzw. reflektierte Lichtanteil jeweils linear polarisiert ist. Der Gitterpolarisator kann demnach als zumindest teiltransparenter Linearpolarisator und/oder als zumindest teilweise reflektierender Linearpolarisator ausgebildet sein, wobei in letzterem Fall (Linearpolarisator in Reflexion) der Gitterpolarisator bei Verwendung z. B. metallischer Gitterlinien im Auflicht ein metallisches Erscheinungsbild aufweist.

Um die erfindungsgemäßen Sicherheitsfolien mit Gitterpolarisatoren als Sicherheits- und Verifikationselemente bei Banknoten und anderen Wertpapieren einsetzen zu können, werden die Sicherheitsfolien mit einer Foliendicke von deutlich unter 100 µm, vorzugsweise von weniger als 50 µm hergestellt. Derart dünne Sicherheitsfolien können beispielsweise über einem Durchsichtsbereich, etwa einem Fenster oder einem Loch, einer Banknote angeordnet werden, wie in Fig. 1 gezeigt.

Dabei ist anzumerken, dass der Durchsichtsbereich des Datenträgers entweder nach der Substratherstellung, z. B. durch Stanzen oder Schneiden, insbesondere Laserstrahlschneiden, oder aber während der Substratherstellung erzeugt werden kann, wie dies in der WO 03/054297 A2 beschrieben ist. Insoweit wird der Offenbarungsgehalt der WO 03/054297 A2 in die vorliegende Anmeldung aufgenommen.

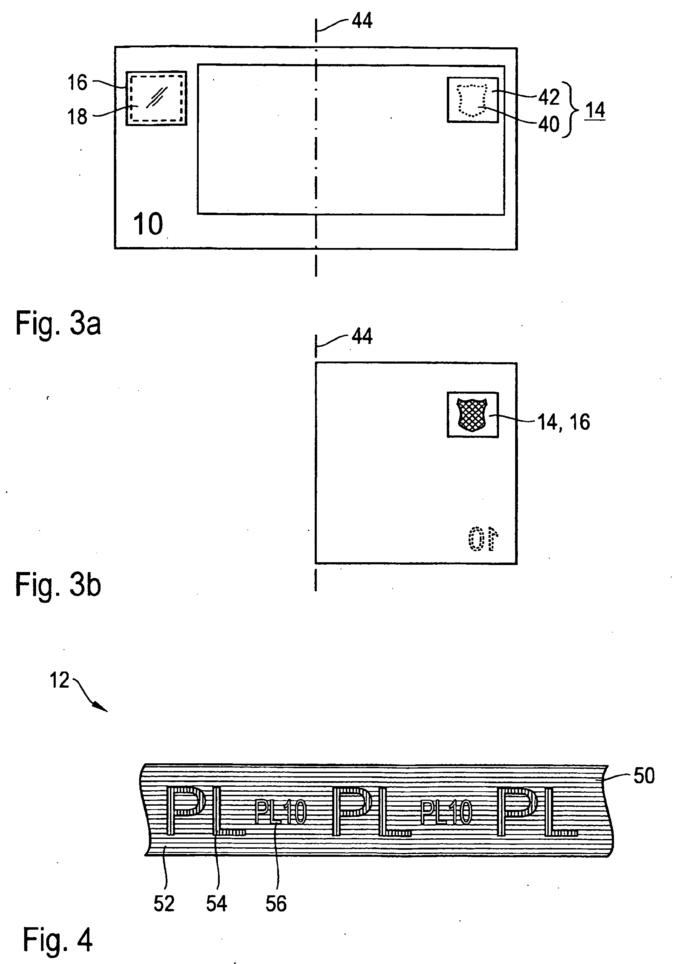

Fig. 3(a) zeigt eine genauere Darstellung der Banknote 10 mit dem Sicherheitselement 14 und dem Verifikationselement 16. Das Sicherheitselement 14 enthält als mit bloßem Auge nicht erkennbares Motiv das in Fig. 3(a) mit gestrichelten Linien eingezeichnete Wappenmotiv 40, 42. Das Sicherheitselement 14 ist dabei so ausgelegt, dass es zu seiner Authentisierung durch ein Polarisationsfilter betrachtet werden muss. Beispielsweise kann das Innere 40 des Wappenmotivs einfallendes Licht mit einer vorgegebenen ersten linearen Polarisationsrichtung reflektieren, während der Hintergrund 42 des Wappenmotivs Licht in einer zur ersten Polarisationsrichtung senkrechten zweiten Polarisationsrichtung reflektiert. Da das menschliche Auge für die Polarisation des Lichts nicht empfindlich ist, erscheint das Sicherheitselement 14 mit bloßem Auge als strukturlose Fläche.

Das über dem Durchsichtsbereich 18 angeordnete Verifikationselement 16 besteht im Ausführungsbeispiel aus einer nur etwa 30 µm dünnen Sicherheitsfolie mit einem einheitlich orientierten Gitterpolarisator der oben beschriebenen Art, dessen Gitterlinien parallel zur ersten Polarisationsrichtung des Sicherheitselements 14 orientiert sind.

Das Sicherheitselement 14 und das Verifikationselement 16 sind nun so auf der Banknote 10 angeordnet, dass sie durch Falten der Note um die Mittellinie 44 übereinander gebracht werden können. Wie in Fig. 3(b) gezeigt, erscheint das Wappenmotiv in dieser gefalteten Lage dunkel vor hellem Hintergrund, da die Gitterlinien des Gitterpolarisators parallel zu dem vom Inneren 40 des Wappenmotivs reflektierten Licht orientiert sind und diesen Lichtanteil somit nach unten vom Betrachter weg reflektieren, wie bei der Beschreibung der Fig. 2 erläutert. Das vom Hintergrund 42 reflektierte Licht ist dagegen senkrecht zu den Gitterlinien polarisiert und wird vom Gitterpolarisator durchgelassen.

Es versteht sich, dass je nach der relativen Orientierung der Polarisationsrichtungen des vom Sicherheitselement 14 reflektierten Lichts und der Gitterlinien des Verifikationselements 16 auch andere Kontrastverhältnisse erzeugt werden können. Auch können verschiedene Grauabstufungen im wahrgenommenen Bild erreicht werden, indem die Polarisationsrichtungen und die Gitterlinien Winkel zwischen 0° und 90° einschließen. Beispielsweise können durch Verwendung von eingeschlossenen Winkeln von 0°, 30°, 60° und 90° die vier Helligkeitswerte Weiß (transmittierend), Hellgrau, Dunkelgrau und Schwarz (nicht durchlässig) erhalten werden. Weiter kann das Verifikationselement 16 auch mehrere Teilbereiche mit Gitterpolarisator aufweisen, in denen sich die Orientierung der Gitterlinien unterscheidet.

In einer weiteren, nicht weiter dargestellten Ausführungsform wird eine erfindungsgemäße Sicherheitsfolie eingesetzt, bei der in Form eines Motivs ausgestaltete Teilbereiche ohne Auflegen eines Polarisationsfilters sichtbar sind und nach Auflegen eines Polarisationsfilters wieder verschwinden.

Die Sicherheitsfolie kann dazu beispielsweise das mit Bezug auf Fig. 3 beschriebene Sicherheitselement 14 enthalten, auf welchem ein einheitlich orientierter Gitterpolarisator angeordnet ist, so dass das Wappenmotiv 40, 42 mit bloßem Auge als dunkles Motiv vor hellem Hintergrund sichtbar ist.

Bei einer solchen Anordnung wird das vom Inneren 40 des Wappenmotivs in einer ersten linearen Polarisationsrichtung reflektierte Licht durch den darauf angeordneten Gitterpolarisator mit zu dieser Polarisationsrichtung parallelen Gitterlinien vom Betrachter weg reflektiert, während das vom Hintergrund 42 reflektierte Licht vom Gitterpolarisator durchgelassen wird. Aus der vorstehenden Beschreibung wird klar, dass die dem Wappenmotiv bildenden Sicherheitselement 14 und die dem Gitterpolarisator zugeordneten Eigenschaften jeweils durch einen entsprechend ausgebildeten erfindungsgemäßen Gitterpolarisator realisiert werden können.

Zur Authentisierung der Sicherheitsfolie kann ein weiterer einheitlich orientierter Gitterpolarisator aufgelegt werden, dessen Gitterlinien senkrecht zur ersten Polarisationsrichtung und damit senkrecht zu den Gitterlinien des ersten Gitterpolarisators der Sicherheitsfolie sind. Die Authentisierung erfolgt dadurch, dass das Wappenmotiv verschwindet, in dem nun auch das vom ersten Gitterpolarisator durchgelassene Licht des Hintergrunds 42 vom Betrachter weg reflektiert wird. Die das Wappenmotiv bildenden Teilbereiche erscheinen daher insgesamt dunkel.

Eine weitere Möglichkeit, die sichtbare Information wieder verschwinden zu lassen, ist durch die Beleuchtung der Sicherheitsfolie mit linear polarisiertem Licht gegeben. Dazu kann beispielsweise eine mit einem Polarisationsfilter ausgestattete Lampe eingesetzt werden. Eine solche Lampe kann insbesondere ein drehbares Polarisationsfilter aufweisen, so dass das Motiv je nach Stellung des Polarisationsfilters erscheint und wieder verwindet.

Fig. 4 zeigt eine detailliertere Aufsicht auf den erfindungsgemäßen Sicherheitsfaden 12 der Fig. 1. Der Sicherheitsfaden 12 ist im überwiegenden Teil seiner Fläche mit einer dünnen Metallschicht 50 versehen. Die Metallschicht enthält als erstes Sicherheitsmerkmal demetallisierte Bereiche 56, die eine Mikro-Negativschrift, im Ausführungsbeispiel die Buchstabenfolge "PL 10", innerhalb des Sicherheitsfadens bilden.

Darüber hinaus sind in die Metallschicht 50 mittels eines Prägeverfahrens für das bloße Auge nicht erkennbare Reliefstrukturen 52, 54 eingeprägt, die als Gitterpolarisatoren wirken. Wie in Fig. 4 gezeigt, steht die Orientierung der Gitterlinien innerhalb der Reliefstrukturen 52, 54 aufeinander senkrecht, so dass auch die Polarisationsebenen der von den Reliefstrukturen 52, 54 reflektierten Strahlung aufeinander senkrecht stehen.

Die Form der Reliefstrukturen 52, 54 bildet ein Muster, eine Zeichenfolge, wie die Buchstabenfolge "PL" der Fig. 4, oder auch eine Codierung, wie etwa einen Barcode. Da das menschliche Auge für die Polarisation des reflektierten Lichts nicht empfindlich ist, ist die Buchstabenfolge "PL" mit bloßem Auge nicht erkennbar. Erst bei Betrachtung des Sicherheitsfadens 12 mit einem Polarisationsfilter wird die versteckte Bildinformation sichtbar. Bei diesem Polarisationsfilter kann es sich um ein externes Polarisationsfilter, aber auch um ein in die Banknote 10 integriertes Verifikationselement handeln, wie bereits im Zusammenhang mit Fig. 3 beschrieben.

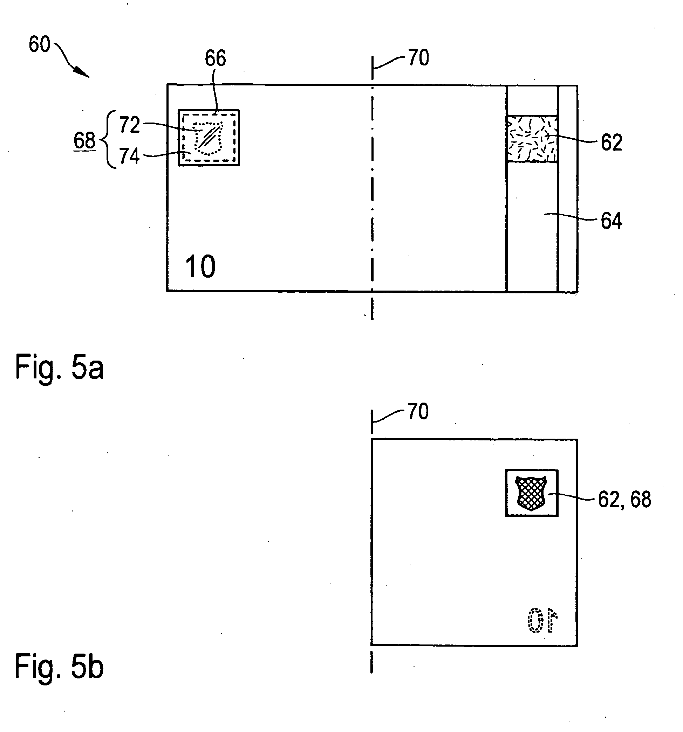

Eine versteckte Information kann auch in einem geeignet strukturierten Gitterpolarisator codiert sein, wie nunmehr anhand des Ausführungsbeispiels der Fig. 5 illustriert wird.

Fig. 5(a) zeigt eine Banknote 60 mit einem Polarisationsbereich 62, der überwiegend linear polarisiertes Licht reflektiert. Bei dem Polarisationsbereich 62 kann es sich beispielsweise um einen Teilbereich eines metallischen Sicherheitselements, wie etwa eines auf der Banknote aufgebrachten Sicherheitsstreifens 64 handeln. Die Banknote 60 enthält weiter eine über einem Durchsichtsbereich 66 angeordnete Sicherheitsfolie 68 mit Gitterpolarisatoren, die so auf der Banknote 60 angeordnet ist, dass sie durch Falten der Note entlang der Mittelinie 70 auf dem Polarisationsbereich 62 zu liegen kommt.

Die Sicherheitsfolie 68 weist im Ausführungsbeispiel mehrere Teilbereiche 72, 74 mit Gitterpolarisatoren auf, in denen sich die Orientierung der Gitterlinien der Polarisatoren unterscheidet. Die Teilbereiche sind in Form eines Motivs, wie etwa des in Fig. 5(a) mit gestrichelten Linien eingezeichneten Wappenmotivs, angeordnet. Beispielsweise transmittiert der Hintergrund 74 des Wappenmotivs nur Licht, dessen Polarisationsrichtung parallel zu der Polarisationsrichtung des vom Polarisationsbereich 62 reflektierten Lichts ist, während das Innere 72 des Wappenmotivs nur Licht mit einer dazu senkrechten Polarisationsrichtung durchlässt. Ohne Hilfsmittel erscheint die Sicherheitsfolie 68 strukturlos transparent, da das menschliche Auge die Polarisationsrichtung des transmittierten Lichts nicht wahrnimmt.

Werden die Sicherheitsfolie 68 und der Polarisationsbereich 62 durch Falten der Note um die Mittelinie 70 zur Deckung gebracht, erscheint das Wappenmotiv dunkel vor hellem Hintergrund, wie in Fig. 5(b) gezeigt, da die vom Polarisationsbereich 62 reflektierte Strahlung nur im Hintergrundbereich 74 von der Sicherheitsfolie 68 transmittiert, im Inneren 72 dagegen reflektiert wird. Auch hier können durch die Wahl der relativen Orientierung der Polarisationsebenen und der Gitterlinien andere Kontrastverhältnisse oder auch Grauabstufungen erzeugt werden. Aus der vorstehenden Beschreibung des Polarisationsbereichs 62 und der Sicherheitsfolie 68 wird klar, dass die dem Bereich 62 und der Folie 68 zugeordneten Eigenschaften jeweils durch einen entsprechend ausgebildeten erfindungsgemäßen Gitterpolarisator realisiert werden können.

Eine weitere Möglichkeit, die versteckten Informationen lichtpolarisierender Sicherheitselemente, wie des Sicherheitsfadens 12 der Fig. 4 oder der Sicherheitsfolie 68 der Fig. 5, auszulesen, ist durch die Beleuchtung der Sicherheitselemente mit linear polarisiertem Licht gegeben. Dazu kann beispielsweise an Kassen oder anderen Verkaufsorten eine mit einem Polarisationsfilter ausgestattete Lampe bereitgestellt sein. Auch das Himmelslicht ist bei blauem Himmel teilweise polarisiert, wobei die relative Polarisation im Winkelabstand von 90° zur Sonne bis zu 70% beträgt. Die versteckte Information, die bei Betrachtung mit unpolarisiertem Kunstlicht unsichtbar ist, kann daher durch Betrachtung vor dem Hintergrund des blauen Himmels sichtbar gemacht werden.

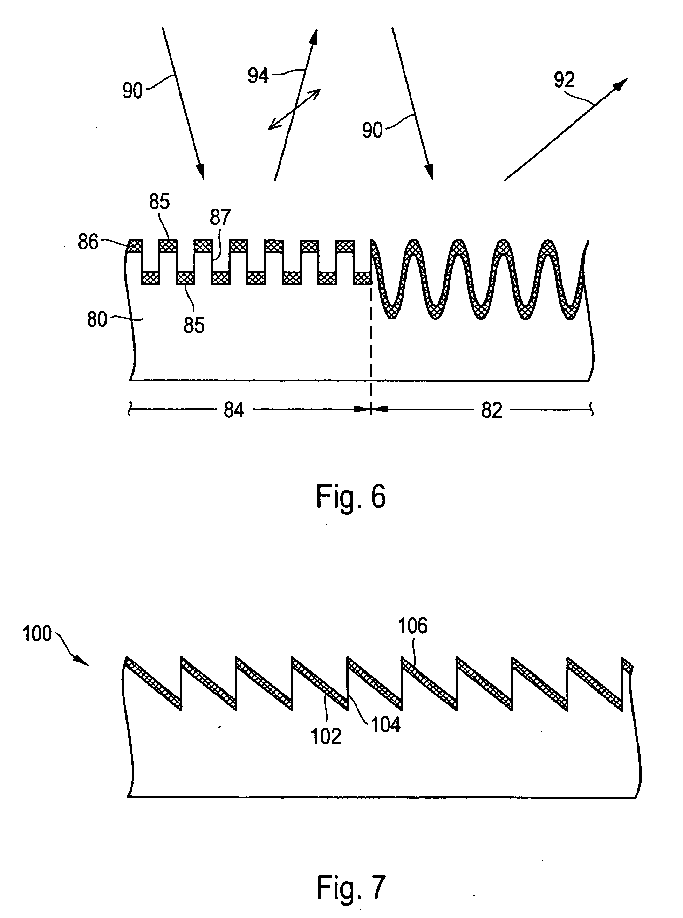

Die erfindungsgemäßen Gitterpolarisatoren können auch mit holgraphischen Beugungsbildern kombiniert werden, wie anhand des Ausführungsbeispiels der Fig. 6 illustriert. Fig. 6 zeigt einen Querschnitt durch eine erfindungsgemäße Sicherheitsfolie 80, die nebeneinanderliegende erste und zweite Prägestrukturen 82 und 84 aufweist. Die ersten Prägestrukturen 82, die mit einer Gitterperiode zwischen etwa 700 Linien/ mm und etwa 2000 Linien/mm ausgeführt sind, dienen dabei der Beugung des einfallenden sichtbaren Lichts 90 zur Erzeugung eines herkömmlichen Hologrammmotivs 92. Die zweiten Prägestrukturen 84 sind auf die polarisierte Reflexion 94 des einfallenden sichtbaren Lichts 90 ausgelegt und weisen, wie oben ausgeführt, eine höhere Gitterperiode von 2200 Linien/mm oder mehr auf. Ferner unterscheiden sich die Prägestrukturen 82 und 84 wesentlich in ihren Querschnitten sowie ihren Prägetiefen.

Die beiden Prägestrukturen 82, 84 können auf einem gemeinsamen Master in klassischer Holgrammbelichtung oder vorzugsweise in Elektronenstrahllithographie nebeneinander erzeugt werden. Auf die Prägestrukturen 82, 84 ist eine Metallschicht 86 aufgebracht, so dass im Bereich der zweiten Prägestrukturen 84 für die polarisierte Reflexion eine Abfolge elektrisch leitfähiger Gitterlinien 85 und im Wesentlichen nichtleitender Zwischenräume 87 entsteht. Im Ausführungsbeispiel sind die Zwischenräume 87 durch die steilen Flanken des Rechteckprofils der zweiten Prägestruktur 84 gebildet, an denen sich kein oder kaum Metall abscheiden kann.

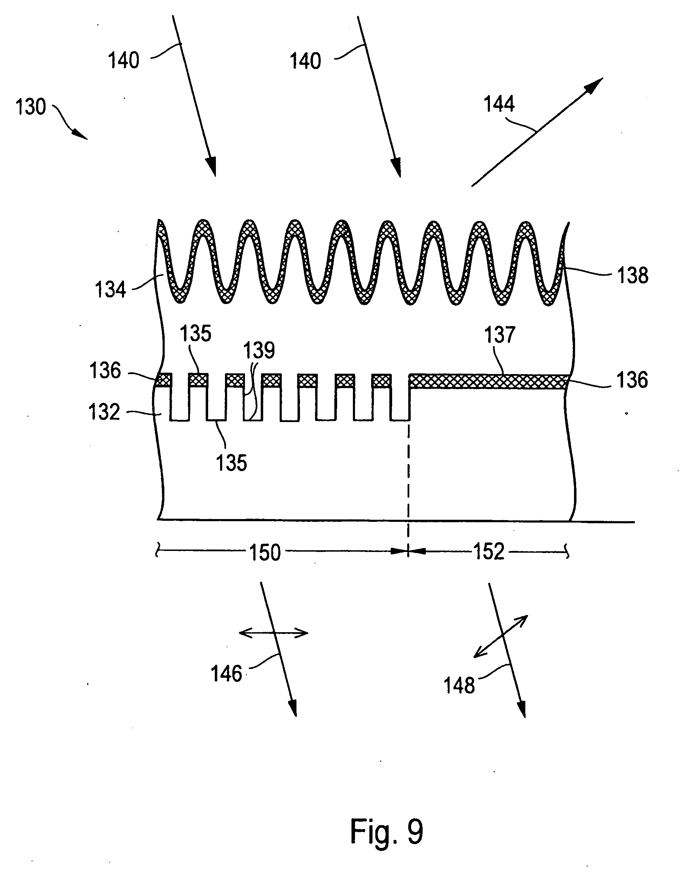

Die erfindungsgemäßen Gitterpolarisatoren können auch in Überlappung mit einer weiteren Reliefstruktur, beispielsweise einem holographischen Beugungsgitter und/oder einer Mattstruktur, vorliegen. Fig. 9 zeigt einen Querschnitt durch eine erfindungsgemäße Sicherheitsfolie 130, die übereinander angeordnete erste und zweite Prägestrukturen 132 und 134 aufweist. Die Prägestrukturen 132, 134 können nacheinander auf einem Substrat erzeugt werden, beispielsweise mittels geeigneter Prägetechniken, wobei die zweiten Prägestrukturen 134 mit Vorteil in einer auf den ersten Prägestrukturen aufgebrachten Lackschicht erzeugt werden.

Die ersten Prägestrukturen 132 sind auf die polarisierte Transmission 146, 148 des einfallenden sichtbaren Lichts 140 ausgelegt und weisen, wie oben ausgeführt, eine Gitterperiode von 2200 Linien/mm oder mehr auf.

Die zweiten Prägestrukturen 134, die mit einer kleineren Gitterperiode zwischen etwa 700 Linien/mm und etwa 2000 Linien/mm ausgeführt sind, dienen dabei in Auflicht der Beugung des einfallenden sichtbaren Lichts 140 zur Erzeugung eines herkömmlichen Hologrammmotivs 144. Die ersten und zweiten Prägestrukturen unterscheiden sich wesentlich in ihrem Querschnitten sowie ihren Prägetiefen.

Auf die ersten Prägestrukturen 132 ist eine Metallschicht 136 aufgebracht, so dass für die polarisierte Transmission eine Abfolge elektrisch leitfähiger Gitterlinien 135, 137 und im Wesentlichen nichtleitender Zwischenräume 139 entsteht. Es kann hierfür vorteilhaft sein, die Prägestrukturen schräg zu bedampfen, so dass sich nur auf den Stegen des Rechteckprofils Metall abscheidet, während die senkrechten Flanken und die Gräben des Rechteckprofils unbedeckt bleiben und die nichtleitenden Zwischenräume 139 bilden.

Die ersten Prägestrukturen weisen im Ausführungsbeispiel zwei Teilbereiche 150, 152 mit Gitterpolarisatoren auf, in denen sich die Orientierung der Gitterlinien der Gitterpolarisatoren unterscheidet. Wie in Fig. 9 angedeutet, stehen die Orientierungen der Gitterlinien 135 und der Gitterlinien 137 innerhalb der Prägestrukturen 132 aufeinander senkrecht, so dass auch die Polarisationsebenen der von den Teilbereichen 150,152 der Prägestrukturen 132 transmittierten Strahlung 146, 148 aufeinander senkrecht stehen. Die Teilbereiche sind in Form eines hier nicht näher dargestellten Motivs, beispielsweise eines Musters, einer Zeichenfolge oder auch einer Codierung, angeordnet.

Die zweiten Prägestrukturen 134 sind zweckmäßig mit einer dünnen, vollflächigen semitransparenten Metallschicht 138 beschichtet. Dabei bedeutet im Rahmen der vorliegenden Beschreibung der Begriff "semitransparent" durchscheinend im Sinne einer gewissen Lichtdurchlässigkeit, wobei jedoch, anders als bei transparenten Materialien, hinter semitransparenten Materialien befindliche Objekte nur diffus oder gar nicht erkennbar sind. Die semitransparente Metallschicht weist bevorzugt eine Transmission von 40% bis 90% im sichtbaren Wellenlängenbereich auf. Alternativ können die zweiten Prägestrukturen auch mit einer gerasterten Metallschicht versehen sein, wobei die gerasterte Metallschicht als Negativraster, insbesondere in Form von transparenten, d.h. demetallisierten Punkten, als Positivraster, insbesondere in Form von metallischen Punkten, oder als Strichraster, insbesondere in Form von metallischen Diagonalstreifen, vorliegen kann.

Eine so gestaltete Sicherheitsfolie 130 kann auch in Transmission betrachtet werden. Die Sicherheitsfolie 130 ist daher zweckmäßig auf einem Durchsichtsbereich eines Wertgegenstandes angeordnet, wie dies für die Sicherheitsfolie 68 in Fig. 5(a) gezeigt ist. Bei Betrachtung in Transmission verschwindet das in Auflicht sichtbare Motiv des Prägehologramms und die Sicherheitsfolie 130 erscheint homogen grau, da das menschliche Auge die Polarisationsrichtung des transmittierten Lichts nicht wahrnimmt.

Erst bei Betrachtung der Sicherheitsfolie 130 mit einem Polarisationsfilter wird die versteckte Bildinformation sichtbar. Bei diesem Polarisationsfilter kann es sich um ein externes Polarisationsfilter, aber auch um ein in den Wertgegenstand integriertes Verifikationselement handeln, wie bereits im Zusammenhang mit Fig. 3 beschrieben.

Darüber hinaus kann in einem als Verifikationselement verwendeten, geeignet strukturierten Polarisationsfilter eine zusätzliche versteckte Information codiert sein, die beispielsweise zusammen mit dem in der Sicherheitsfolie integrierten Motiv ein Gesamtmotiv ergibt.

Allgemein wird zur Herstellung der dünnen Sicherheitsfolien mit Gitterpolarisator eine Reliefstruktur mit parallelen Gitterlinien auf einem Substrat erzeugt, beispielsweise mittels Prägetechniken, holographisch mittels Direktbelichtung oder mittels Elektronenstrahllithographie. Die Elektronenstrahllithographie bietet hier besondere Vorzüge, da mit diesem Verfahren problemlos periodische oder aperiodische Strukturen mit Strukturgrößen unterhalb von 0,5 µm erzeugt werden können und auch die Steilheit der Flanken der Gitterlinien gezielt nach Wunsch eingestellt werden kann.

Die Reliefstruktur wird durch anschließende Vakuummetallisierung mit einer Metallschicht versehen, so dass nebeneinanderliegende elektrisch leitfähige Gitterlinien entstehen, die durch im Wesentlichen nichtleitende Zwischenräume getrennt sind. Dies kann durch geeignete Ausbildung der Reliefstruktur in Kombination mit der Richtung der Bedampfung erreicht werden. Beispielsweise wird bei senkrechter Bedampfung auf den Stegen und in den Gräben der Reliefstrukturen mehr Metall abgeschieden, als an den Flanken.

Es kann auch vorteilhaft sein, die Reliefstruktur schräg zu bedampfen, so dass bestimmte Bereiche der Reliefstruktur bei der Metallisierung gar nicht beschichtet werden. Neben der Verwendung von Reliefstrukturen mit Rechteck- oder Trapezprofil bietet sich auch der Einsatz von Reliefstrukturen mit einem Sägezahnprofil mit im Wesentlichen senkrechten Flanken an, wie im Ausführungsbeispiel der Fig. 7 gezeigt. Bei dieser Ausgestaltung der Reliefstruktur 100 scheidet sich bei senkrechter oder schräger Bedampfung von rechts nur an den schrägen Flanken 102 Metall 106 ab, während die senkrechten Flanken 104 unbedeckt bleiben. Es entsteht eine Reliefstruktur mit voneinander elektrisch isolierten, parallelen, leitfähigen Gitterlinien.

Die Profiltiefe der eingesetzten Reliefstrukturen spielt im Rahmen der Erfindung nur eine untergeordnete Rolle. In der Praxis haben sich Profiltiefen zwischen 50 nm und 500 nm bewährt. Auch die Schichtdicke der Metallbeschichtung kann in einem weiten Bereich gewählt werden, solange durch die Reliefstruktur gewährleistet ist, dass die einzelnen metallisierten Gitterlinien elektrisch im Wesentlichen voneinander isoliert sind. In der Praxis werden meist Schichtdicken zwischen 5 nm und 50 nm eingesetzt. Es versteht sich, dass die elektrische Isolation der Gitterlinien nicht vollständig sein muss, für den Polarisationseffekt genügt es vielmehr, wenn der elektrische Widerstand senkrecht zu den Gitterlinien wesentlich höher ist als parallel zu den Gitterlinien. Die Metallisierung kann beispielsweise durch Beschichtung der Reliefstrukturen mit Aluminium, Kupfer, Chrom, Silber oder Gold erfolgen. Ferner ist es denkbar, auf die beschichteten Reliefstrukturen weitere Schichten abzuscheiden, um z. B. eine optisch variable Schichtstruktur mit einem Farbkippeffekt zu erzeugen. Diese zusätzlichen Effektschichten sind aus Gründen der Übersichtlichkeit in den Figuren der vorliegenden Anmeldung aber nicht dargestellt.

Zur Massenfertigung von Gitterpolarisatoren kann mittels klassischer Holographie oder Elektronenstrahllithographie ein Master hergestellt werden, aus dem mittels bekannter Vervielfältigungstechniken ein rotatives Prägewerkzeug hergestellt wird. Mit diesem kann dann in Prägetechnik eine Folie mit der gewünschten Prägestruktur erzeugt werden.

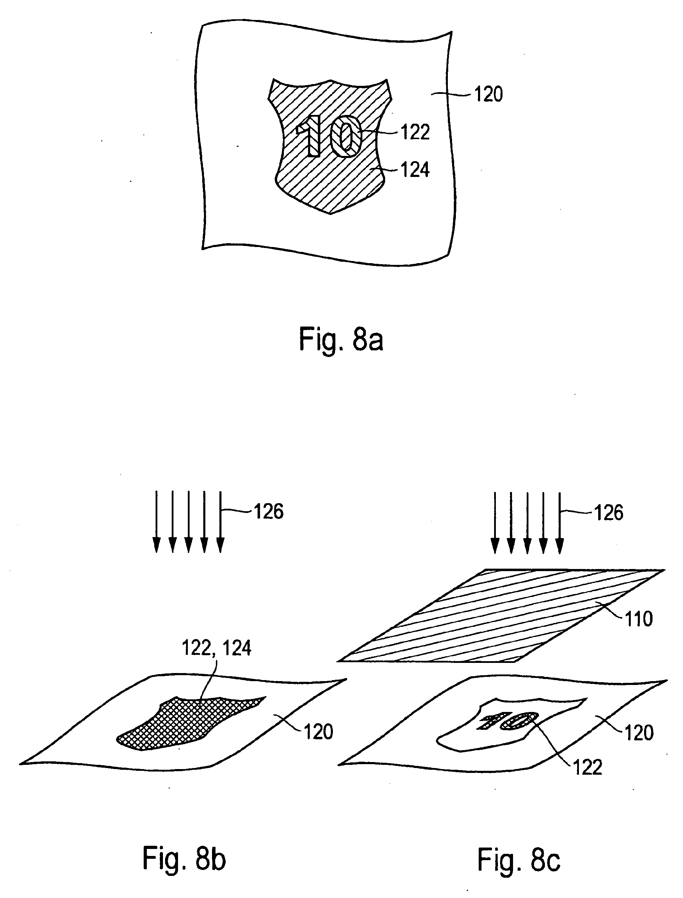

Wird ein Gitterpolarisator einer erfindungsgemäßen Sicherheitsfolie mit einer Liniendichte von 4000 Linien/mm bis 10000 Linien/mm ausgeführt, so wird nicht nur sichtbares, sondern sogar ultraviolettes Licht linear polarisiert. Wie in Fig. 8 illustriert, lässt sich mit einem derartigen Gitterpolarisator 110 beispielsweise ein Sicherheitselement 120 authentifizieren, das UVanregbare Sicherheitsmerkmale 122,124 aufweist, die sich nur mit linear polarisiertem Licht einer bestimmten Orientierung anregen lassen. Solche Sicherheitsmerkmale können beispielsweise durch geeignet orientierte Flüssigkristallschichten bereitgestellt werden.

Wird das Sicherheitselement 120 nun mit gewöhnlicher unpolarisierter UV-Strahlung 126 beaufschlagt, wie in Fig. 8(b) gezeigt, so leuchten alle Sicherheitsmerkmale 122,124 in gleicher Weise auf, da die unpolarisierte Strahlung 126 alle Polarisationsrichtungen enthält.

Wird das Sicherheitselement 120 dagegen durch den UV-Gitterpolarisator 110 hindurch beleuchtet, wie in Fig. 8(c) gezeigt, so werden selektiv nur diejenigen Sicherheitsmerkmale 122 mit der passenden Orientierung angeregt und eine im Sicherheitselement codierte Information, hier Ziffer "10", wird sichtbar.

In einer weiteren, nicht weiter dargestellten Ausführungsform wird eine erfindungsgemäße Sicherheitsfolie eingesetzt, die eine Vielzahl an Bildpunkten (Pixeln) aufweist, wobei jedem Bildpunkt über den Winkel, den die Gitterlinien eines jeden Bildpunkts mit einer vorbestimmten Polarisationsrichtung einschließen, ein bestimmter Graustufenwert (Helligkeitswert) zugeordnet ist. Eine so gestaltete Sicherheitsfolie wird mit Vorteil in Transmission betrachtet. Wird die Sicherheitsfolie z. B. mit linear polarisiertem Licht bestrahlt, erkennt der Betrachter ein hochaufgelöstes Graustufen-Transmissionsbild, z. B. ein Portrait oder eine sonstige Darstellung. Die Sicherheitsfolie dieser Ausführungsform kann wieder mit Vorteil auf einem Durchsichtsbereich eines Wertgegenstandes angeordnet sein, wie dies für die Folie 68 in Fig. 5(a) gezeigt ist. Wird nun die Sicherheitsfolie mit linear polarisiertem Licht, z. B. aus einer entsprechend ausgebildeten Lichtquelle, bestrahlt, kann der Betrachter von der der Lichtquelle abgewandten Seite ein hochaufgelöstes Graustufen-Transmissionsbild erkennen. Alternativ ist es sogar denkbar, dass die Sicherheitsfolie einfach vor einen (möglichst einfarbigen) Bereich eines LCD-Bildschirms gehalten wird, um durch das vom LCD-Bildschirm ausgehende linear polarisierte Licht das Graustufen-Transmissionsbild sichtbar zu machen.

## Patentansprüche

1. Sicherheitsfolie, insbesondere Sicherheits- oder Verifikationselement, die in zumindest einem Teilbereich einen Gitterpolarisator enthält, der ein Substrat mit einer ersten Oberfläche aufweist, in die eine Reliefstruktur eingebracht ist, wobei
- die Reliefstruktur eine aperiodische Anordnung von elektrisch leitfähigen, parallelen Gitterlinien mit einer vorbestimmten Gitterkonstante und Gitterorientierung aufweist, die durch im Wesentlichen nichtleitende Zwischenräume voneinander getrennt sind, und
- die Gitterkonstante der aperiodisch angeordneten Gitterlinien so gewählt ist, dass der Gitterpolarisator die Polarisation des auf die Gitterlinien auftreffenden Lichts verändert, so dass das reflektierte und/oder das transmittierte Licht in einer vorbestimmten Ebene linear polarisiert ist.

2. Sicherheitsfolie nach Anspruch 1, **dadurch gekennzeichnet, dass** die Gitterlinien eine Gitterperiode von etwa 2200 Linien/mm oder mehr, bevorzugt von etwa 2500 Linien/mm oder mehr aufweisen.

3. Sicherheitsfolie nach Anspruch 1 oder 2, **dadurch gekennzeichnet, dass** die Profiltiefe der Reliefstruktur zwischen etwa 50 nm und etwa 500 nm liegt, und/oder dass die Reliefstruktur mit steilen Flanken ausgebildet ist, insbesondere mit einem Flankenwinkel von 60° oder mehr.

4. Sicherheitsfolie nach wenigstens einem der Ansprüche 1 bis 3, **dadurch gekennzeichnet, dass** die Reliefstruktur metallisiert ist, um die elektrisch leitfähigen, parallelen Gitterlinien zu bilden.

5. Sicherheitsfolie nach wenigstens einem der Ansprüche 1 bis 4, **dadurch gekennzeichnet, dass** die Reliefstruktur ein Rechteck- oder ein Trapezprofil aufweist und bevorzugt zumindest an einer Flanke des Rechteck- oder Trapezprofils nicht metallisiert ist, und/oder dass die Reliefstruktur im Wesentlichen nur an den horizontalen Flächen des Rechteck- oder Trapezprofils metallisiert ist.

6. Sicherheitsfolie nach Anspruch 4, **dadurch gekennzeichnet, dass** die Reliefstruktur ein Sägezahnprofil mit im Wesentlichen senkrechten Flanken aufweist, wobei an den senkrechten Flanken keine Metallisierung vorliegt.

7. Sicherheitsfolie nach wenigstens einem der Ansprüche 4 bis 6, **dadurch gekennzeichnet, dass** die Schichtdicke der Metallisierung zwischen 5 nm und 50 nm liegt, und/oder dass die Metallisierung durch eine Aluminium-, Gold- oder Silberschicht gebildet ist.

8. Sicherheitsfolie nach wenigstens einem der Ansprüche 1 bis 7, **dadurch gekennzeichnet, dass** die Sicherheitsfolie zumindest zwei Teilbereiche mit Gitterpolarisatoren mit unterschiedlicher Gitterkonstante und/oder unterschiedlicher Gitterorientierung der Gitterlinien enthält, wobei die zumindest zwei Teilbereiche bevorzugt in Form von Mustern, Zeichen oder einer Codierung angeordnet sind.

9. Sicherheitsfolie nach wenigstens einem der Ansprüche 1 bis 8, **dadurch gekennzeichnet, dass** die polarisierende Reliefstruktur mit einer Anordnung elektrisch leitfähiger, paralleler Gitterlinien mit einer weiteren Reliefstruktur kombiniert ist, die der Beugung des einfallenden Lichts zur Erzeugung eines Beugungsbilds, insbesondere eines Hologrammmotivs, dient, wobei die weitere Reliefstruktur bevorzugt eine Gitterperiode zwischen 700 Linien/mm und 2000 Linien/mm aufweist, und wobei die polarisierende Reliefstruktur und die weitere Reliefstruktur bevorzugt einander nicht überlappend nebeneinander angeordnet sind.

10. Sicherheitsfolie nach wenigstens einem der Ansprüche 1 bis 9, **dadurch gekennzeichnet, dass** die Sicherheitsfolie ein Sicherheits- oder Verifikationselement mit einer Dicke von etwa 50 µm oder weniger bildet.

11. Sicherheitsfolie nach wenigstens einem der Ansprüche 1 bis 10, **dadurch gekennzeichnet, dass** die Sicherheitsfolie ein Verifikationselement in Form eines über einem Durchsichtsfenster angeordneten Polarisationsfilters, insbesondere eines UV-Polarisationsfilters bildet, und dass die Gitterlinien bevorzugt eine Gitterperiode zwischen etwa 4000 Linien/mm und etwa 10000 Linien/mm aufweisen.

12. Sicherheitsfolie nach wenigstens einem der Ansprüche 1 bis 11, **dadurch gekennzeichnet, dass** eine oder mehrere weitere Schichten vorgesehen sind, die dem Schutz der Sicherheitsfolie oder einer ihrer Teilschichten, einer verbesserten Haftung einzelner Schichten oder einer weiteren Erhöhung der Fälschungssicherheit dienen.

13. Verfahren zur Herstellung einer Sicherheitsfolie, insbesondere eines Sicherheits- oder Verifikationselements, bei dem in zumindest einem Teilbereich der Sicherheitsfolie ein Gitterpolarisator erzeugt wird, der ein Substrat mit einer in einer ersten Oberfläche eingebrachten Reliefstruktur umfasst, wobei
- die Reliefstruktur mit einer aperiodischen Anordnung von elektrisch leitfähigen, parallelen Gitterlinien mit einer vorbestimmten Gitterkonstante und Gitterorientierung, insbesondere mittels Prägetechniken oder holographisch mittels Direktbelichtung oder mittels Elektronenstrahllithographie erzeugt wird, die durch im Wesentlichen nichtleitende Zwischenräume voneinander getrennt sind, wobei die Reliefstruktur insbesondere mittels Prägetechniken, oder holographisch mittels Direktbelichtung oder mittels Elektronenstrahllithographie erzeugt wird, und
- die Gitterkonstante der aperiodisch angeordneten Gitterlinien so gewählt wird, dass der Gitterpolarisator die Polarisation des auf die Gitterlinien auftreffenden Lichts verändert, so dass das reflektierte und/oder das transmittierte Licht in einer vorbestimmten Ebene linear polarisiert wird.

14. Verfahren nach Anspruch 13, **dadurch gekennzeichnet, dass** die elektrisch leitfähigen Gitterlinien durch eine schräge Bedampfung der Reliefstruktur mit einem Metall gebildet werden.

15. Datenträger, insbesondere Wertdokument, wie Banknote, Ausweiskarte oder dergleichen, der mit einer Sicherheitsfolie, insbesondere einem Sicherheits- oder Verifikationselement, nach einem der Ansprüche 1 bis 14 ausgestattet ist.

## Claims

1. A security foil, especially a security or verification element, that includes, in at least one sub-region, a grating polarizer that exhibits a substrate having a first surface into which a relief pattern is introduced, wherein
- the relief pattern exhibits an aperiodic arrangement of electrically conductive, parallel grating lines that have a predetermined grating constant and grating orientation and that are separated from one another by substantially non-conductive spaces, and
- the grating constant of the aperiodically arranged grating lines is chosen such that the grating polarizer changes the polarization of the light impinging on the grating lines such that the reflected and/or the transmitted light is linearly polarized in a predetermined plane.

2. The security foil according to claim 1, **characterized in that** the grating lines exhibit a grating period of about 2,200 lines/mm or more, preferably of about 2,500 lines/mm or more.

3. The security foil according to claim 1 or 2, **characterized in that** the profile depth of the relief pattern is between about 50 nm and about 500 nm, and/or that the relief pattern is developed having steep sides, especially having an included angle of 60° or more.

4. The security foil according to at least one of claims 1 to 3, **characterized in that** the relief pattern is metalized to form the electrically conductive, parallel grating lines.

5. The security foil according to at least one of claims 1 to 4, **characterized in that** the relief pattern exhibits a rectangular or a trapezoidal profile and preferably is not metalized on at least one side of the rectangular or trapezoidal profile, and/or **in that** the relief pattern is metalized substantially only on the horizontal surfaces of the rectangular or trapezoidal profile.

6. The security foil according to claim 4, **characterized in that** the relief pattern exhibits a sawtooth profile having substantially vertical sides, no metalization being present on the vertical sides.

7. The security foil according to at least one of claims 4 to 6, **characterized in that** the layer thickness of the metalization is between 5 nm and 50 nm, and/ or **in that** the metalization is formed by an aluminum, gold or silver layer.

8. The security foil according to at least one of claims 1 to 7, **characterized in that** the security foil includes at least two sub-regions having grating polarizers having differing grating constants and/or differing grating orientations of the grating lines, the at least two sub-regions preferably being arranged in the form of patterns, characters or a code.

9. The security foil according to at least one of claims 1 to 8, **characterized in that** the polarizing relief pattern is combined with an arrangement of electrically conductive, parallel grating lines having a further relief pattern that serves to diffract the incident light to produce a diffraction image, especially a hologram motif, the further relief pattern preferably exhibiting a grating period between 700 lines/mm and 2,000 lines/mm, and the polarizing relief pattern and the further relief pattern preferably being arranged next to one another not overlapping one another.

10. The security foil according to at least one of claims 1 to 9, **characterized in that** the security foil forms a security or verification element having a thickness of about 50 µm or less.

11. The security foil according to at least one of claims 1 to 10, **characterized in that** the security foil forms a verification element in the form of a polarization filter arranged over a see-through window, especially a UV polarization filter, and **in that** the grating lines preferably exhibit a grating period between about 4,000 lines/mm and about 10,000 lines/mm.

12. The security foil according to at least one of claims 1 to 11, **characterized in that** one or more further layers are provided that serve to protect the security foil or one of its sub-layers, to improve the adhesion of individual layers or to further increase the counterfeit security.

13. A method for manufacturing a security foil, especially a security or verification element, in which, in at least one sub-region of the security foil, a grating polarizer is produced that comprises a substrate having a relief pattern introduced into a first surface, wherein
- the relief pattern is produced having an aperiodic arrangement of electrically conductive, parallel grating lines that have a predetermined grating constant and grating orientation, especially produced by means of embossing techniques or holographically by means of direct exposure or by means of electron beam lithography, and that are separated from one another by substantially non-conductive spaces, the relief pattern especially being produced by means of embossing techniques or holographically by means of direct exposure or by means of electron beam lithography, and
- the grating constant of the aperiodically arranged grating lines is chosen such that the grating polarizer changes the polarization of the light impinging on the grating lines, such that the reflected and/or the transmitted light is linearly polarized in a predetermined plane.

14. The method according to claim 13, **characterized in that** the electrically conductive grating lines are formed by an oblique evaporation of the relief pattern with a metal.

15. A data carrier, especially a value document, such as a banknote, identification card or the like, that is furnished with a security foil, especially a security or verification element, according to one of claims 1 to 14.

## Revendications

1. Feuille de sécurité, en particulier élément de sécurité ou de vérification, qui contient au moins un domaine partiel d'un polariseur à réseau, qui comprend un substrat possédant une première surface dans laquelle une structure en relief est incorporée,
- la structure en relief présentant une disposition apériodique de traits de réseau parallèles et conducteurs de l'électricité, avec une constante de réseau et une orientation du réseau prédéterminées, ces traits étant séparés les uns des autres par des espaces intermédiaires pour l'essentiel non conducteurs, et
- la constante de réseau des traits de réseau à disposition apériodique est choisie de telle sorte que le polariseur à réseau modifie la polarisation de la lumière tombant sur les traits du réseau, de façon que la lumière réfléchie et/ou la lumière transmise soit soumise à une polarisation rectiligne dans un plan prédéterminé.

2. Feuille de sécurité selon la revendication 1, **caractérisée en ce que** les traits du réseau présentent une période de réseau d'environ 2 200 traits/mm ou plus, de préférence d'environ 2 500 traits/mm ou plus.

3. Feuille de sécurité selon la revendication 1 ou 2, **caractérisée en ce que** la profondeur de profil de la structure en relief est comprise entre environ 50 nm et environ 500 nm, et/ou que la structure en relief est configurée avec des flancs fortement inclinés, présentant en particulier un angle de flanc de 60° ou plus.

4. Feuille de sécurité selon au moins l'une des revendications 1 à 3, **caractérisée en ce que** la structure en relief est métallisée pour former les traits de réseau parallèles et conducteurs de l'électricité.

5. Feuille de sécurité selon au moins l'une des revendications 1 à 4, **caractérisée en ce que** la structure en relief présente un profil rectangulaire ou trapézoïdal et de préférence n'est pas métallisée au moins sur un flanc du profil rectangulaire ou trapézoïdal, et/ou que la structure en relief n'est pour l'essentiel métallisée que sur les surfaces horizontales du profil rectangulaire ou trapézoïdal.

6. Feuille de sécurité selon la revendication 4, **caractérisée en ce que** la structure en relief présente un profil en dents de scie, avec des flancs pour l'essentiel verticaux, aucune métallisation n'existant sur les flancs verticaux.

7. Feuille de sécurité selon au moins l'une des revendications 4 à 6, **caractérisée en ce que** l'épaisseur de la couche de métallisation est comprise entre 5 nm et 50 nm, et/ou que la métallisation est formée d'une couche d'aluminium, d'or ou d'argent.

8. Feuille de sécurité selon au moins l'une des revendications 1 à 7, **caractérisée en ce que** la feuille de sécurité contient au moins deux domaines partiels comportant des polariseurs à réseau, ayant des constantes de réseau différentes et/ou des orientations de réseau des traits du réseau différentes, les au moins deux domaines partiels étant de préférence disposés sous forme de modèles, de caractères ou d'un codage.

9. Feuille de sécurité selon au moins l'une des revendications 1 à 8, **caractérisée en ce que** la structure en relief polarisante est combinée à un arrangement de traits de réseau parallèles et conducteurs de l'électricité ayant une autre structure en relief, qui sert à diffracter la lumière incidente dans le but de produire une image de diffraction, en particulier un motif holographique, l'autre structure en relief présentant de préférence une période de réseau comprise entre 700 traits/mm et 2 000 traits/mm, et la structure en relief polarisante et l'autre structure en relief étant de préférence disposée l'une à côté de l'autre sans chevauchement l'une par rapport à l'autre.

10. Feuille de sécurité selon au moins l'une des revendications 1 à 9, **caractérisée en ce que** la feuille de sécurité forme un élément de sécurité ou de vérification ayant une épaisseur d'environ 50 µm ou moins.

11. Feuille de sécurité selon au moins l'une des revendications 1 à 10, **caractérisée en ce que** la feuille de sécurité est un élément de vérification sous forme d'un filtre polarisant disposé sur une fenêtre transparente, en particulier d'un filtre à polarisation UV, et que les traits du réseau présentent de préférence une période de réseau comprise entre environ 4 000 traits/mm et environ 10 000 traits/mm.

12. Feuille de sécurité selon au moins l'une des revendications 1 à 11, **caractérisée en ce qu'**une ou plusieurs couches supplémentaires sont prévues, qui servent à protéger la feuille de sécurité ou l'une de ses couches partielles, à une meilleure adhérence des couches individuelles ou à une augmentation plus poussée de la sécurité vis-à-vis des falsifications.

13. Procédé de fabrication d'une feuille de sécurité, en particulier d'un élément de sécurité ou de vérification, dans lequel, dans au moins un domaine partiel de la feuille de sécurité, on réalise un polariseur à réseau, qui comprend un substrat ayant une structure en relief incorporée dans une première surface,
- la structure en relief étant produite avec un arrangement apériodique de traits de réseau parallèles et conducteurs de l'électricité, présentant une constante de réseau et une orientation de réseau prédéterminées, en particulier par des techniques d'estampage, ou par une technique holographique, par éclairage direct ou par lithographie par faisceau d'électrons, qui sont séparées les unes des autres par des espaces intermédiaires pour l'essentiel non conducteurs, la structure en relief étant produite en particulier par des techniques d'estampage ou par des techniques holographiques, par éclairement direct ou par une lithographie à faisceau d'électrons, et
- la constante de réseau des traits de réseau à arrangement apériodique est choisie de telle sorte que le polariseur à réseau modifie la polarisation de la lumière tombant sur les traits du réseau, de façon que la lumière réfléchie et/ou la lumière transmise subisse une polarisation rectiligne dans un plan prédéterminé.

14. Procédé selon la revendication 13, **caractérisé en ce que** les traits de réseau conducteurs de l'électricité sont formés par métallisation de la structure en relief par vaporisation oblique.

15. Support de données, en particulier document de valeur, tel qu'un billet de banque, une carte d'identité ou analogues, qui est muni d'une feuille de sécurité, en particulier d'un élément de sécurité ou de vérification, selon l'une des revendications 1 à 14.
